Europäisches Patentamt

European Patent Office

Office européen des brevets

(11) Publication number: **0 272 071 B1**

# EUROPEAN PATENT SPECIFICATION

(45) Date of publication of patent specification: **11.03.92**

(51) Int. Cl.⁵: **C08K 3/22**, C08K 9/06, C08L 31/04, C08K 5/00, H01B 3/44, //(C08L31/04,9:02)

(21) Application number: **87310982.1**

(22) Date of filing: **14.12.87**

(54) **Elastomeric compositions.**

(30) Priority: **16.12.86 GB 8629978**

(43) Date of publication of application:
**22.06.88 Bulletin 88/25**

(45) Publication of the grant of the patent:
**11.03.92 Bulletin 92/11**

(84) Designated Contracting States:
**BE DE ES FR GB GR IT LU NL SE**

(56) References cited:
**EP-A- 0 017 579**
**EP-A- 0 145 213**
**FR-A- 2 141 918**
**GB-A- 2 107 720**

**CHEMICAL ABSTRACTS, vol. 99, no. 37, 17th October 1983, pages 47-48, abstract no. 123630g, Columbus, Ohio, US; & IN-A-150 981 (KABEL- UND METALLWERKE GUTEHOFF-NUNGSHUETTE A.-G.) 05-02-1983**

(73) Proprietor: **BICC Public Limited Company Devonshire House Mayfair Place London W1X 5FH(GB)**

(72) Inventor: **Ohbi, Daljit Singh 79, Edward Avenue off Narborough Road South Leicester(GB)**

(74) Representative: **Poole, Michael John et al BICC plc Group Patents & Licensing Dept. Network House 1, Ariel Way Wood Lane London W12 7SL(GB)**

Rank Xerox (UK) Business Services

EP 0 272 071 B1

## Description

This invention relates to elastomeric compositions that are halogen free, flame-retardant and resistant to hydrocarbon oils and many other fluids, and which in preferred forms are suitable, inter alia, for making electric cable sheaths to comply with Navel Engineering Standard NES 518 (Issue 2) promulgated by the UK Ministry of Defence (Controllerate of the Navy) in February 1986. It includes cables sheathed with the compositions.

Cables on board ship (whether navel or merchant) are liable to rough usage, including (but not limited to) accidental exposure to sea-water, fuel oil, lubricating oil, hydraulic fluid and other liquids; and the hazards of fire at sea will always be greater than on land. There is therefore a demand for cables that contribute little or nothing to the spread of fire and cannot produce hydrogen chloride fumes or other corrosive volatiles under fire conditions, which are resistant to exposure to at least the fluids indicated, besides having a good abrasion resistance and long service life. Such demands cannot be met by conventional cable making materials.

Halogen-free elastomeric compositions with good fluid resistance exist, but some are not usefully cross-linkable by any of the conventional techniques of the cable industry and others fail to meet one or more of the requirements of the Standard.

We have now discovered a range of compositions based on certain mixtures of ethylene-vinyl acetate copolymers (EVA) with hydrogenated butadiene/acrylonitrile copolymers (HNBR), that can be used to meet the requirements of this standard and which are cross-linked by conventional chemical techniques (e.g. using peroxide).

The composition in accordance with the invention comprise (in parts by weight):

40 to 65 parts of an EVA with a vinyl acetate content of more than 60;

35 - 60 parts of a fully hydrogenated butadiene/acrylonitrile copolymer, making a total polymer content of 100 parts;

4 - 10 parts of a plasticiser

130 - 160 parts of alumina trihydrate filler with a BET surface area greater than 6 m$^2$/g;

1 - 3 parts of a coupling agent for the filler; and a chemical curing agent in an amount sufficient to cross-link the polymer constituent but not sufficient to reduce the tear strength of the cured composition below a limit of 5N/mm;

the purity of the filler being such that it gives a specific conductance of less than 100$\mu$S when tested as set out in the Appendix hereto. The composition will normally also contain at least one antioxidant, and may include other minor additives, such as pigments and processing aids

Commercially available grades of EVA are generally suitable, provided the vinyl acetate content is high enough; 70% vinyl acetate is preferred. Too low a vinyl acetate content results in inadequate fluid resistance. The content of EVA should be as high as possible, subject to an allowance for processing tolerances, because EVA's contribute to lowering toxicity index and are also substantially cheaper than HNBR's; we prefer to use about 60 parts of the EVA.

Suitable HNBR;s are available on the market under the trademarks THERBAN, TORNAC and ZETAL; grades 1707 and 1907 of Therban are both satisfactory.

Suitable plasticisers include the trimellitates.

The purity and surface area of the alumina triydrate are critical to satisfactory results; preferably the purity is such that an aqueous extrct made and tested as detailed in the Appendix hereto yields a specific conductance of less than 50 $\mu$s and the BET surface area is at least 12 m$^2$/g. There may be merit in using a mixture of grades of alumina trihydrate of substantially different particle size/surface area. A mixture of 'paper grade alumina' sold under the trademark Hydral as Hydral 710B(SD) (specific conductance 30 - 60 $\mu$S, BET about 7 m$^2$/g) and the product sold as Ultrafine 35E (specific conductance about 11.3 $\mu$S, BET about 35 m$^2$/g) have given good results; it may also be possible to meet the requirements of the Standard using the grade sold as Trihyde OL 111 (specific conductance around 500 $\mu$S, BET about 11 m$^2$/g), but we have found it difficult because their higher level of ionic impurities makes the compositions susceptible to swelling by water, and we do not recommend them.

Conventional silane coupling agents are suitable, and we have obtained good results with 'Silane A172', vinyl tris (methoxyethoxy) silane. Other recommended silanes include Silane A174 ($\gamma$ methacryloxy propyl trimethoxy silane) and Silane Y9774 (believed to be a mixture of approximately equal parts of vinyl triethoxy silane and an oligomer thereof); titanates and other classes of coupling agents can be used.

Commercially available peroxides can be used, provided they generate free radicals at temperatures below those at which the filler loses any significant amount of water; bis tert butylperoxy isopropyl) benzene is particularly suitable; a coagent such as triallyl cyanurate is preferably used, as has been suggested for curing HNBR's.

The level of curatives needs to be carefully chosen, on an empirical basis, to get the required properties after curing at an appropriate temperature and time; a level about half that customary for curing HNBR by itself has been found satisfactory in number of trials.

One suitable antioxidant is polymerised 1,2-dihydro 2,2,4-trimethyl quinoline (Flectol). We prefer also to include a hydrolysis retarder, such as polycarbodiimide (Rhenogran P50).

For cable sheathing, the preferred pigment is furnace black, or other suitable low-structure carbon black; about 1 - 3 parts are sufficient, larger amounts best being avoided because they have an adverse effect on flame spread and/or smoke properties.

Example 1

EVA (70% vinyl acetate content, Levapren KA8338) was blended with HNBR (Therban 1707) in the proportion of 60 parts EVA to 40 HNBR. 2 parts of Flectol were added as antioxidant and 3 parts of Rhenogran P50 as hydrolysis retarder, followed by 100 parts of Hydral 710B(SD), 40 parts of Ultrafine 35E, 2 parts Black N550 (a furnace black) and 2 parts of a 50%-active formulation of Silane A172. After 'sweeping down', 6 parts of trioctyl trimellitate (plasticiser) and 1 part of stearic acid (processing aid) were added and the mixture allowed to mature for 24 hours. It was then returned to the mill and 4 parts of Perkadox 1440 (a 40% - active formulation of bis (tert. butylperoxy isopropyl) benzene on whiting) and 1 part of a 70% - active triallylcyanurate formulation added. Moulded plaques had the following properties:
Tensile Strength 9.3 MPa
100% modulus 3.6 MPa
(i.e. the stress required to produce 100% elongation at room temperature)
Elongation at break 450%
Tear Resistance 6.1 N/mm
Oxygen Index 31.5%
Temperature Index 265°C
Smoke Index 14.5
Fluid Resistance (28 days in fluid at temperature indicated)

|  | OX 38 Hydraulic Fluid 50°C | DERV 20°C | Deionised Water 50°C |
|---|---|---|---|
| Volume Swell (%) | 45 | 12.5 | 9.3 |
| Retention of tensile strength (%) | 84 | 96 | 96 |
| Retention of elongation (%) | 65 | 65 | 90 |

Insulation resistance (K factor) 1.05 M Ω km
Thermal Endurance - 40,000 hours at 112°C.
Samples of cable sheathing had the following properties:
Tensile Strength 8.6 MPa
Elongation at break 360%
Tear Strength 6.0 N/mm

```
Heat ageing:   after 7 days at:    110°C   135°C   150°C

retention of tensile strength (%) 105    116     123

retention of elongation (%)        82     71      58

(both referred to unaged value)
```

Oxygen Index 30.5%
Temperature Index 265
Toxicity Index 4.5/100g
Smoke Index 14.5
Insulation Resistance (K factor) 1.05 MΩkm

The cable sheath passed the ozone resistance, heat shock and cold elongation tests of NES 518, and fluid resistance tests were as follows:

|  | Hydraulic fluids at 50°C | | Lubricating oils at 50°C | |
|---|---|---|---|---|
|  | OX30 | OX38 | OX50 | OMD113 |
| Volume Swell (%) | 4.1 | 51.7 | -5.0 | -2.1 |
| retention of tensile strength (%) | 101 | 65 | 116 | 111 |
| retention of elongation (%) | 92 | 67 | 83 | 89 |

|  | DERV at 20°C | Deionised water at 50°C | 3.5% Saline at 50°C |
|---|---|---|---|
| Volume swell (%) | 19.5 | 9.8 | 1.1 |
| retention of tensile strength (%) | 81 | 83 | 90 |
| retention of elongation (%) | 78 | 108 | 106 |

(the volume swell in OX38 is marginal, in the sense that it is equal, within experimental uncertainty, to the specification limit).

Example 2

This was substantially the same as Example 1, except that the Hydral 710B(SD) content was reduced to 90 parts, making 130 parts total hydrated alumina. Physical properties and fluid resistance were very similar to those observed in Example 1, but the temperature index, at 247°C, was marginal.

Example 3

This was similar to Example 1 except that
(a) the amount of Levapren KA 8338 was reduced to 50 parts by weight and that of Therban 1707 increased to 50 parts by weight;

(b) the amount of Hydral 710B(SD) was slightly increased to 101 parts by weight; and

(c) the amount of Silane A172 was halved to 1 part by weight.

Tests on cable material made from this composition had a tensile strength of 8.33 MN/m$^2$, elongation at break of 420%, and tear strength 5.81 N/mm.

The cable was in general compliance with the requirements of NES 518, and in particular the fluid resistance results were as follows:

|  | Hydraulic fluids at 50°C | | Lubricating oils at 50°C | |
|---|---|---|---|---|
|  | OX30 | OX38 | OX50 | OMD113 |
| Volume Swell (%) | 5.0 | 44 | -4 | -1 |
| retention of tensile strength (%) | 105 | 83 | 122 | 116 |
| retention of elongation (%) | 102 | 83 | 97 | 93 |

|  | DERV at 20°C | Deionised water at 50°C | 3.5% Saline at 50°C |
|---|---|---|---|
| Volume swell (%) | 17.5 | 8.1 | 1.2 |
| retention of tensile strength (%) | 97 | 97 | 96 |
| retention of elongation (%) | 81 | 117 | 95 |

Comparison Example 4

This formulation was similiar to Example 1 except that only 30 parts of the EVA was used with 70 parts of the HNBR. Plaque properties were as follows:

|  | OX 38 | DERV | Water |
|---|---|---|---|
| Swell | 25 | 22 | 6.7 |
| Tensile retention | 97 | 95 | 95 |
| Elongation retention | 68 | 70 | 93 |

This formulation fails to meet the toxicity index requirement of NES 518.

Comparison Examples 5-7

5

Formulations similar to Example 1 were made using EVA's with vinyl acetate contents of 60% (Example 4) and 40% (Example 5) and an ethylene-methyl acrylate elastomer sold as Vamac (Example 6). All failed in the test for resistance to OX 38.

Comparison Example 8

A formulation similar to Example 1 but using as the filler 60 parts of Hydral 710B (SD) and 90 parts Trihyde OL 111 required up to 5 parts Perkadox 14 - 40 to cure to a tear resistance of 6.7N/mm. This formulation passed many of the specification requirements but marginally failed the test for resistance to water with a volume swell of about 12%.

Appendix: Test for purity of alumina trihydrate fillers.

Suitability of alumina triyhydrate fillers, in terms of purity, may be tested by taking a 1 g ± 2% sample of the filler and boiling it for 5 minutes in approximately 50 cm$^3$ of deionised water with a measured specific conductance of less that 5 microSiemens (for a 1cm cube). After cooling, the solution is diluted to 100.0 cm$^3$ with the same quality of water, and a suitable sample centrifuged in a polypropylene tube to eliminate suspended particles. The specific conductance of the centrifuged solution is measured at, or corrected to, 20°C and the specific conductance of the water deducted. Measurements quoted herein were made with a Pye PW 9509 conductivity meter, using Pye conductivity cell ref. PW/9510/60 with a cell constant of 3 and temperature coefficient 2.2%/°C.

**Claims**

1.  Halogen-free elastomeric composition comprising (in parts by weight);
    40 to 65 parts of an EVA with a vinyl acetate contact of more than 60%;
    35 - 60 parts of fully hydrogenated butadiene/acrylonitrile copolymer, making a total polymer content of 100 parts;
    4 - 10 parts of plasticiser;
    130 - 160 parts of alumina trihydrate filler with a BET surface area greater than 6m$^2$/g;
    1 - 3 parts of a coupling agent for the filler;
    and a chemical curing agent in an amount sufficient to cross-link the polymer consituent but not sufficient to reduce the tear strength of the cured compostion below a limit of 5N/mm,
    the purity of the filler being such that it gives a specific conductance of less than 100 $\mu$S when tested by taking a 1g ± 2% sample of the filler and boiling it for 5 minutes in approximately 50cm$^3$ of deionised water with a measured specific conductance of less than 5 microSiemens (for a 1 cm cube), cooling, diluting to 100.0 cm$^3$ with the same quality of water, centrifuging a sample of the solution in a polypropylene tube to eliminate suspended particles, measuring the specific conductance of the centrifuged solution at, or correcting it to, 20°C, and deducting the specific conductance of the water.

2.  A composition as claimed in Claim 1 in which the filler has a BET surface area of at least 12m$^2$/g.

3.  A composition as claimed in Claim 1 or Claim 2 comprising two grades of alumina trihydrate of substantially different particle size/surface area.

4.  A composition as claimed in any one of the preceding Claims in which the EVA has a vinyl acetate content of about 70%.

5.  A composition as claimed in any one of the preceding claims in which the amount of EVA present is about 60 parts.

6.  A composition as claimed in any one of the preceding claims in which the coupling agent is a silane.

7.  A composition as claimed in any one of the Claims 1 - 6 in which the coupling agent is vinyl tris (methoxyethoxy) silane.

8.  A composition as claimed in any one of the preceding claims in which the curing agent comprises bis (tert butylperoxy isopropyl) benzene in combination with triallylcyanurate.

9. An electric cable sheathed with the composition claimed in any one of the preceding Claims.

**Revendications**

1. Composition élastomère exempte d'halogène, comprenant (en parties en poids):

de 40 à 65 parties d'un copolymère éthylène/acétate de vinyle (EVA) ayant une teneur en acétate de vinyle de plus de 60 %;

de 35 à 60 parties d'un copolymère butadiène/acrylonitrile totalement hydrogéné, ce qui donne une teneur totale en polymère de 100 parties;

de 4 à 10 parties d'un plastifiant;

de 130 à 160 parties d'une charge constituée de trihydrate d'alumine ayant une superficie BET supérieure à 6 m$^2$/g;

de 1 à 3 parties d'un agent de couplage pour la charge;

et un durcisseur chimique en une quantité suffisante pour réticuler le constituant polymère, mais non suffisante pour réduire la résistance à la déchirure de la composition durcie au-dessous d'une limite de 5 N/mm,

la pureté de la charge étant telle qu'elle donne une conductance spécifique de moins de 100 $\mu$S lorsqu'on la teste par prélèvement d'un échantillon de 1 g ± 2 % de la charge et ébullition de celui-ci pendant 5 minutes dans environ 50 ml d'eau désionisée ayant une conductance spécifique mesurée inférieure à 5 microsiemens (pour 1 cm$^3$), refroidissement, dilution à 100,0 cm$^3$ avec la même quantité d'eau, centrifugation d'un échantillon de la solution dans un tube en polypropylène pour l'élimination de particules en suspension, mesure à 20°C de la conductance spécifique de la solution centrifugée, la valeur étant éventuellement ramenée à 20°C, et soustraction de la conductance spécifique de l'eau.

2. Composition selon la revendication 1, dans laquelle la charge a une superficie BET d'au moins 12 m$^2$/g.

3. Composition selon la revendication 1 ou 2, comprenant deux qualités de trihydrate d'alumine à tailles de particules/superficies nettement différentes.

4. Composition selon l'une quelconque des revendications précédentes, dans laquelle l'EVA a une teneur en acétate de vinyle d'environ 70 %.

5. Composition selon l'une quelconque des revendications précédentes, dans laquelle la quantité d'EVA présent est d'environ 60 parties.

6. Composition selon l'une quelconque des revendications précédentes, dans laquelle l'agent de couplage est un silane.

7. Composition selon l'une quelconque des revendications 1 à 6, dans laquelle l'agent de couplage est le vinyltris-(méthoxyéthoxy)silane.

8. Composition selon l'une quelconque des revendications précédentes, dans laquelle le durcisseur comprend du bis(tert-butylperoxy-isopropyl)benzène en association avec du triallylcyanurate.

9. Câble électrique gainé avec la composition selon l'une quelconque des revendications précédentes.

**Patentansprüche**

1. Halogenfreie elastomere Zusammensetzung umfassend (in Gewichtsteilen);

40 bis 65 Teile eines EVA mit einem Vinylacetatgehalt größer 60 %;

35 bis 60 Teile eines vollständig hydrierten Butadien/Acrylnitril-Copolymerisats, die einen Gesamtpolymergehalt von 100 Teilen ergeben;

4 bis 10 Teile Weichmacher;

130 bis 160 Teile Aluminiumoxidtrihydrat-Füllstoff mit einer BET-Oberfläche größer 6 m$^2$/g;

1 bis 3 Teile eines Haftmittels für den Füllstoff;

und einen chemischen Härter in einer für die Vernetzung der Polymerbestandteile ausreichenden Menge, die jedoch die Zugfestigkeit der gehärteten Zusammensetzung nicht unter eine Grenze von 5 N/mm mindert,

wobei die Reinheit des Füllstoffes so geartet ist, daß sich eine spezifische Leitfähigkeit von weniger als 100 $\mu$s ergibt, falls eine entnommene 1 g ± 2 % Probe des Füllstoffs durch 5-minütiges Kochen in ca. 50 cm$^3$ deionisiertem Wasser mit einer gemessenen spezifischen Leitfähigkeit von höchstens 5 $\mu$s (für einen 1 cm-Würfel), Abkühlen, Verdünnen auf 100 cm$^3$ mit Wasser derselben Qualität, Zentrifugieren einer Probe der Lösung in einen Polypropylenbecher zur Entfernung suspendierter Teilchen, Messen der Spezifischen Leitfähigkeit der zentrifugierten Lösung bei, oder korrigiert auf, 20°C und Subtrahieren der spezifischen Leitfähigkeit des Wassers, geprüft wird.

2. Zusammensetzung nach Anspruch 1, wobei der Füllstoff eine BET-Oberfläche von mindestens 12 m$^2$/g besitzt.

3. Zusammensetzung nach Anspruch 1 oder 2, umfassend zwei Aluminiumoxidtrihydratqualitäten mit wesentlich unterschiedlicher Teilchengröße/Oberfläche.

4. Zusammensetzung nach einem der vorangehenden Ansprüche, wobei das EVA einen Vinylacetatgehalt von etwa 70 % besitzt.

5. Zusammensetzung nach einem der vorangehenden Ansprüche, wobei die Menge an EVA etwa 60 Teile beträgt.

6. Zusammensetzung nach einem der vorangehenden Ansprüche, wobei das Haftmittel ein Silan ist.

7. Zusammensetzung nach einem der Ansprüche 1 bis 6, wobei das Haftmittel Vinyl-tris(methoxyethoxy)-silan ist.

8. Zusammensetzung nach einem der vorangehenden Ansprüche, wobei der Härter Bis-(tert.-butylperoxyisopropyl)benzol in Kombination mit Triallylcyanurat umfaßt.

9. Elektrisches Kabel, ummantelt mit der Zusammensetzung nach einem der vorangehenden Ansprüche.